# FASCICULE DE BREVET EUROPEEN

(11) **EP 0 408 480 B1**
(45) Date de publication et mention de la délivrance du brevet: **15.09.1993**
(21) Numéro de dépôt: 90440063.7
(22) Date de dépôt: 11.07.1990
(51) Int. Cl.: G01M 3/18

(54) **Dispositif pour le contrôle d'étanchéité des réseaux de câbles à gaine métallique**
Apparat zur Kontrolle der Dichte eines Netzes aus Kabeln mit metallischem Überzug
Apparatus for controlling the tightness of a network of metallic covered cables

(30) Priorité: 11.07.1989 FR 8909565; 04.12.1989 FR 8916160
(43) Date de publication de la demande: 16.01.1991
(73) Titulaire: SOCRAT, F-83210 Sollies-Pont (FR); BELEC, F-83210 Sollies-Ville (FR)
(72) Inventeur: Bussinger, Jean, F-83220 La Farlede (FR); Jacquelin, Yvon, F-83880 Meounes-Les-Montrieux (FR)
(74) Mandataire: Arbousse-Bastide, Jean-Claude Philippe

(56) Documents cités:
- EP-A- 0 170 736
- WO-A-88/08967
- US-A- 4 095 174
- IEEE TRANSACTIONS ON COMMUNICATION TECHNOLOGY, vol. COM-13, no. 4, décembre 1965, pages 540-544; J.H. WOLFF et al.: "Remote cable pressure monitoring system"
- PATENT ABSTRACTS OF JAPAN, vol. 5, no. 126 (P-75)[798], 14 août 1981; & JP-A-56 64 633 (HITACHI SEISAKUSHO K.K.) 01-06-1981

## Description

La présente invention a pour objet un dispositif pour le contrôle d'étanchéité des réseaux de câbles à gaine métallique ou à fils métalliques, et notamment de câbles à fibres optiques, mis en oeuvre dans les systèmes de télécommunication.

On sait que l'utilisation des fibres optiques dans les réseaux de télécommunication s'est largement répandue depuis quelques années en raison des avantages appréciables que ce matériau offre par rapport à ceux existants, et spécialement par rapport aux câbles coaxiaux. La fibre optique constitue en particulier le support large bande tridirectionnel auquel les technologies de pointe font appel et dont les applications se multiplient, notamment en transmission, télédistributioon, télémesures, etc...

Les fibres optiques sont généralement logées dans des câbles en polyéthylène comportant une gaine métallique entre l'âme du câble et l'enveloppe de polyéthylène. Les câbles à fibre optique sont le plus souvent gainés d'aluminium ou d'acier, et désignés sous les vocables "ALUPE" et "ACIEPE", ces câbles présentant une structure tubée ou à joncs rainurés.

Le bon fonctionnement d'un réseau de télécommunication est bien entendu lié à l'étanchéité des câbles mis en oeuvre, une infiltration d'eau générant à plus ou moins long terme la dégradation des câbles.

Dans le cas des câbles à fibres optiques, cette dégradation peut causer des dommages importants, en raison de la lenteur avec laquelle la dégradation initiale du câble porteur se propage jusqu'au support optique de transmission. Il importe donc de pouvoir intervenir rapidement sur une ligne présentant un défaut d'étanchéité, ce qui présuppose un contrôle continu et efficace du réseau de câbles permettant la détection rapide d'un tel défaut avant que les fibres optiques soient atteintes. Or actuellement la défaillance d'un câble ne peut être signalée que lorsque la fibre optique est endommagée.

La présente invention a pour but de remédier à cette carence des réseaux de télécommunication en proposant un dispositif qui permet un contrôle continu et efficace de l'étanchéité des câbles à gaîne métallique ou à fils métalliques, ainsi qu'une surveillance du vieillissement de ces réseaux, par un contrôle de l'état de la gaine métallique desdits câbles.

La présente invention a ainsi pour objet un dispositif permettant la détection systématique rapide d'un défaut d'étanchéité dans un réseau de câbles de télécommunication, ce dispositif étant destiné à être installé dans le centre de télécommunication et comportant en combinaison :
a) des moyens pour sélectionner un à un les ensembles de câbles à contrôler.
b) des moyens pour réaliser la déconnexion de la terre de l'ensemble de câbles sélectionné.
c) des moyens d'une part de mesure de la résistance d'isolement par rapport à la terre des câbles sélectionnés et de comparaison de cette résistance avec une résistance étalon, d'autre part de mesure du couple électrochimique généré par un défaut d'étanchéité.
d) des moyens d'alarme se déclenchant lorsqu'un défaut d'étanchéité est détecté.
e) des moyens permettant, à partir d'un ordinateur piloté par un logiciel spécifique, d'enregistrer, de traiter et de fournir toutes les informations concernant ces ensembles.
f) des moyens permettant, à partir d'un centre de surveillance ou in-situ, d'interroger le système.

Dans la pratique, les ensembles de câbles contrôlés peuvent être constitués par les baies du réseau, qui sont sélectionnées tour à tour, périodiquement, à partir d'une unité centrale de mesure installée dans le centre de distribution, chaque baie du réseau étant reliée à une unité de baie elle-même reliée à l'unité centrale de mesure et renfermant le dispositif électrique nécessaire pour réaliser, sur la commande de cette dernière, la déconnexion de la baie correspondante de la terre et sa connexion avec le point de mesure.

Le dispositif selon l'invention comprend ainsi deux parties complémentaires :
- une unité centrale de mesure qui comporte un système de déclenchement de la mesure, un système d'acquisition des informations de mesure, de traitement de ces informations et d'indication d'alarme ;
- des unités de baies disposées sur chaque départ de câble à tester et reliées individuellement à l'unité centrale, chaque unité de baie renfermant un relais qui permet d'isoler les câbles de la terre afin de permettre la mesure de la résistance d'isolement du câble.

Selon un premier mode de réalisation du dispositif selon l'invention, la déconnexion de la terre de l'ensemble de câbles sélectionné est réalisée en tête du réseau par une seule unité de baie (UB) reliée à l'unité centrale de mesure, l'extrémité du réseau étant isolée de la terre ou équipée d'un parasurtenseur.

Selon un second mode de réalisation du dispositif selon l'invention, lorsque la mise à la terre est effectuée à toutes les extrémités du réseau, la déconnexion de la terre de l'ensemble de câbles sélectionné est réalisée aux extrémités du réseau au moyen de deux unités de baies : une unité de baie "origine" (UBo) connectée à la tête de réseau et au moins une unité de baie "extrémité" (UBe) connectée aux extrémités des câbles, chacune de ces unités de baie étant branchée sur les câbles du réseau à proximité de chaque mise à la terre, l'unité de baie "origine" UBo étant par ailleurs connectée à l'unité centrale de mesure.

Conformément à l'invention, chaque unité de baie de tête de réseau UBo comporte un émetteur qui envoie, après déconnexion de la terre, un code sous forme d'impulsions électriques modulées en fréquence, entre la gaine métallique et la terre, de manière à provoquer la déconnexion des mises à la terre du câble ou de l'ensemble de câbles concerné, la ou les unités de baie "extrémité" UBe réalisant cette déconnexion dès qu'elles identifient le code.

A cet effet, chaque unité de baie "origine" UBo du dispositif selon l'invention comporte un générateur de code binaire associé à un modulateur FSK, l'ensemble générant l'émission d'impulsions électriques modulées en fréquence.

A cet effet également, chaque unité de baie"extrémité" UBe comporte une résistance faible montée en série avec la terre, sur laquelle arrive le signal émis, lequel est analysé par un décodeur associé à un récepteur FSK branché en série sur ladite résistance, ledit décodeur, lorsqu'il identifie le code approprié, envoyant un signal à une commande de relais qui réalise aussitôt la déconnexion du câble ou de l'ensemble de câbles de la terre.

La commande de relais est avantageusement complétée par un temporisateur qui a pour fonction de ne laisser agir la commande que le temps de la mesure, par exemple environ 1 minute.

Conformément à l'invention, une fois la déconnexion de la terre réalisée, la mesure de la résistance de la baie sélectionnée est effectuée par application d'une basse tension fournissant une première valeur de la tension au point de mesure. Un commutateur permettant de changer le signe de la tension conduit à une deuxième valeur de la tension au point de mesure, les deux valeurs mesurées permettant l'évaluation, d'une part de la résistance d'isolement de l'unité de baie par rapport à la terre, d'autre part du couple électrochimique, manifesté par la dyssimétrie de charge lors de l'inversion de polarité. Ces deux grandeurs sont comparées à des seuils de référence réglables, un dépassement de ces seuils provoquant le déclenchement d'une alarme signalant la présence d'un défaut d'étanchéité dans l'unité de baie sélectionnée.

Le déclenchement de l'alarme peut être visualisé au niveau de l'unité de baie concernée par l'allumage d'un voyant d'alarme, un voyant de sélection pouvant par ailleurs manifester sa sélection par l'unité centrale de mesure.

Le dispositif selon l'invention comprend avantageusement deux alarmes consécutives, de nature différente, déclenchées après renouvellement des mesures au bout d'un laps de temps de l'ordre de 5 à 10 mn, si la deuxième et la troisième mesure détectent chacune un défaut.

La signalisation des alarmes peut se faire par déclenchement d'une préalarme après mesure de la disymétrie de charge et/ou déclenchement d'une alarme après mesure de la résistance d'isolement.

La préalarme peut prendre la forme d'un voyant jaune sur l'unité centrale et rouge sur l'unité de baie concernée, tandis que l'alarme peut prendre celle de deux voyants rouges allumés tant sur l'unité centrale que sur l'unité de baie.

L'unité centrale de mesure du dispositif selon l'invention comporte avantageusement une liaison série avec un terminal permettant la lecture des mesures enregistrées in-situ ou à distance ainsi que la synchronisation du cycle de mesures avec une horloge.

Selon un mode de réalisation préférentiel, le terminal est associé à un moyen tel qu'un MODEM permettant de transmettre des informations à distance par ligne téléphonique, de manière à permettre l'interrogation à distance de n'importe quelle unité centrale. Un tel MODEM peut être constitué par exemple d'un minitel ou d'un ordinateur.

D'autres caractéristiques et avantages de la présente invention ressortent de la description détaillée qui suit d'un de ses modes de réalisation illustré par le dessin annexé, étant bien entendu que cette description ne présente aucun caractère limitatif vis-à-vis de l'invention.

Dans le dessin annexé :
- la figure 1 représente en vue schématique les deux modes de réalisation d'un dispositif de contrôle selon l'invention.
- la figure 2 est une représentation synoptique d'une unité de baie du dispositif de la figure 1.
- la figure 3 représente une vue synoptique d'une unité de baie de tête de réseau, UBo, d'un des modes de réalisation du dispositif selon l'invention.
- la figure 4 représente une vue synoptique d'une unité de baie d'extrémité de réseau, UBe, de ce même mode de réalisation.
- la figure 5 est une représentation synoptique de l'unité centrale de mesure d'un dispositif selon l'invention.

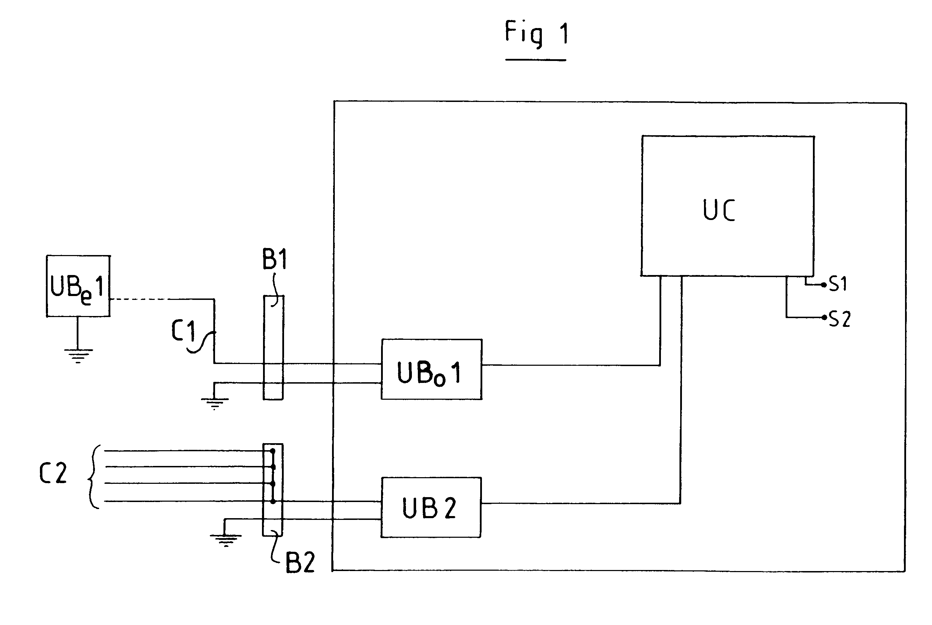

Si on se réfère d'abord à la figure 1, on voit que le dispositif de contrôle selon l'invention comprend une unité centrale de mesure UC connectée électriquement à un certain nombre d'unités de baies, parmi lesquelles les unités de baies UBo1 et UB 2, dont chacune est reliée, à travers un bornier B1, respectivement B2, d'une part à la terre et d'autre part aux parties métalliques d'un certain nombre de câbles C₁, respectivement C₂.

L'unité de baie UBo1 est par ailleurs associée, en extrémité du câble ou de l'ensemble de câbles C₁ qu'elle contrôle, à une unité de baie UBe1. L'unité centrale UC comporte d'autre part deux sorties, une S1, conduisant aux dispositifs d'alarme, et l'autre S2, servant à son alimentation en courant continu.

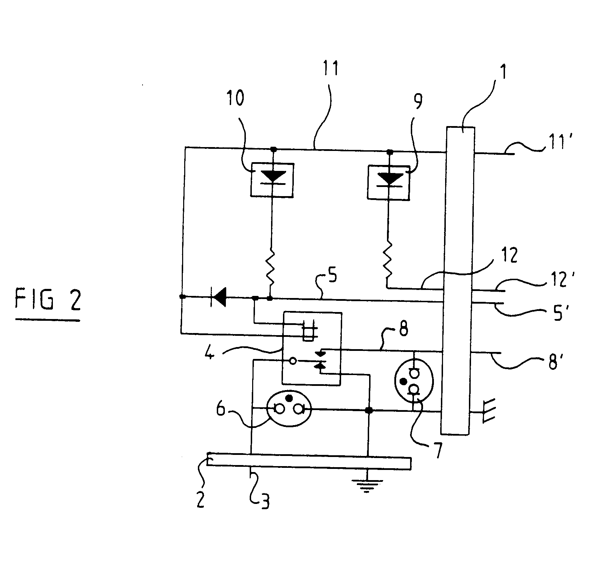

Si on se réfère ensuite à la figure 2, on voit que chaque unité de baie comporte un bornier 1 la reliant à l'unité centrale de mesure et un bornier 2 la reliant d'une part à la terre et d'autre part aux câbles regroupés en un point 3.

Un relais 4 relié par l'intermédiaire de connexions 5 et 5' à l'unité de mesure, permet, sur ordre de cette dernière, de déconnecter de la terre les câbles du point 3, deux éclateurs 6 et 7 disposés en amont et en aval du relais 4 servant à la protection du dispositif contre des surtensions éventuelles.

Le point commun 3 des câbles, normalement relié à la terre, est alors relié à travers des connexions 8 et 8' au point de mesure situé dans l'unité centrale. La mesure de la résistance d'isolement des câbles 3 est effectuée, et comparée à une résistance étalon prise comme seuil d'alerte.

En cas de dépassement de cette dernière, un dispositif d'alarme 9 est déclenché à partir de l'unité centrale au travers des connexions 12 et 12', provoquant l'allumage d'un voyant lumineux rouge sur la façade de l'unité de baie. Par ailleurs un voyant lumineux de couleur blanche ou verte peut s'allumer sur sa façade signalant sa sélection par l'unité centrale, dès que cette dernière commande le relais 4, grâce à un dispositif d'alarme 10 placé entre la connexion électrique 5 et les connexions 11 et 11' d'alimentation de l'unité de baie en courant continu.

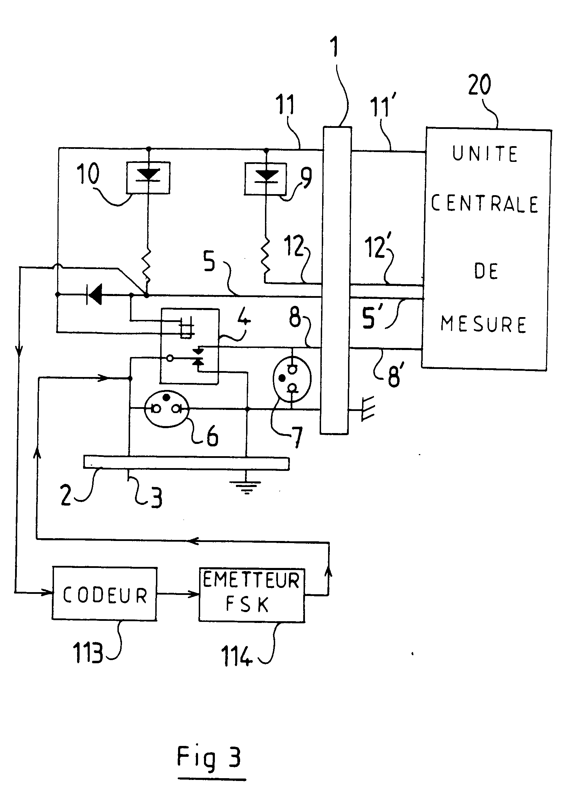

Si on se réfère ensuite à la figure 3, on voit que l'unité de baie "origine" comporte un bornier 1 la reliant à l'unité centrale de mesure 20 et un bornier 2 la reliant d'une part à la terre et d'autre part aux câbles regroupés en un point 3.

Un relais 4, relié par l'intermédiaire de connexions électriques 5 et 5' à l'unité de mesure, permet, sur ordre de cette dernière, de déconnecter de la terre les câbles du point 3, deux éclateurs 6 et 7 disposés de part et d'autre du relais 4 servant à la protection du dispositif contre des surtensions éventuelles.

Le point commun 3 des câbles, normalement relié à la terre, est alors relié, à travers les connexions 8 et 8', au point de mesure situé dans l'unité centrale, autorisant la mesure de la résistance d'isolement des câbles 3, laquelle est comparée, dans l'unité centrale de mesure, à une résistance prédéterminée prise comme seuil d'alerte.

En cas de dépassement de cette dernière, un dispositif d'alarme 9 est déclenché à partir de l'unité centrale, à travers les connexions 12 et 12', provoquant l'allumage d'un voyant lumineux, par exemple de couleur rouge, sur la façage de l'unité de baie. Par ailleurs un voyant lumineux d'une autre couleur, par exemple blanche ou verte, peut s'allumer sur sa façade signalant sa sélection par l'unité centrale, dès que cette dernière commande le relais 4, grâce à un dispositif de signalisation 10 monté entre la connexion 5 et les connexions 11 et 11' qui alimentent l'unité de baie UBo en courant continu.

Parallèlement à l'allumage de ce voyant de signalisation, la sélection de l'unité de baie UBo par l'unité centrale de mesure déclenche la mise en marche d'un émetteur qui lui est relié par l'intermédiaire des connexions électriques 5-5', et qui est formé d'un générateur de code binaire 113 associé à un modulateur FSK 114 qui est monté entre ledit générateur 113 et le relais 4, provoquant l'émission d'impulsions modulées entre la terre et la gaine métallique des câbles de la baie.

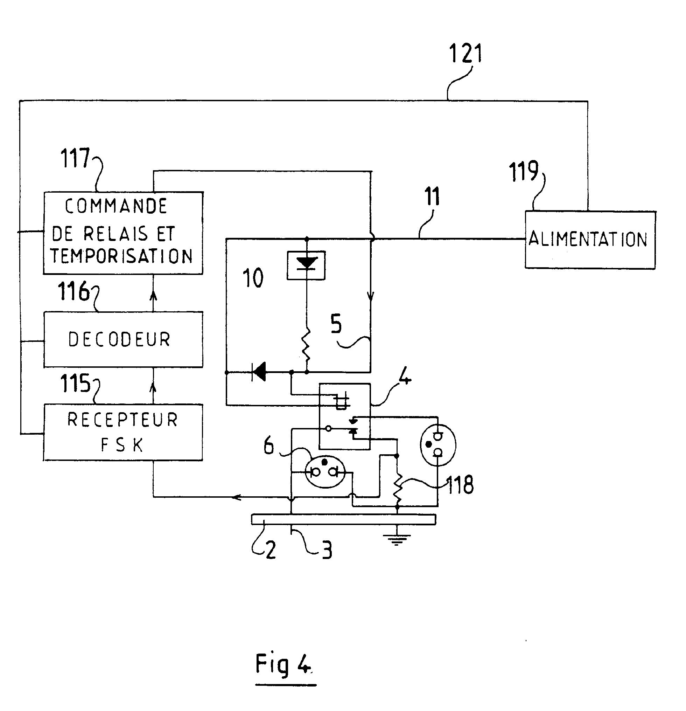

Si on se réfère maintenant à la figure 4, on voit que l'unité de baie "extrémité" comporte, outre un bornier 2 la reliant d'une part à la terre et d'autre part aux câbles regroupés en un point 3, un relais 4, deux éclateurs 6 et 7 disposés de part et d'autre du relais 4 et un dispositif de signalisation 10.

Toutefois, dans ce cas, le relais 4 est relié par une connexion 5 à une commande de relais 117 reliée à un décodeur 116 et à un récepteur FSK 115 par ailleurs relié à une résistance 118 qui est montée en série avec la terre et qui reçoit le signal émis par l'émetteur de l'unité de baie UBo.

Le récepteur FSK 15 capte ce signal que le décodeur 16 analyse. Lorsque ce dernier reconnaît dans le signal le code approprié, il envoie un signal à la commande de relais 117 qui commande alors le relais 4, provoquant la déconnexion du câble de la terre. Un temporisateur complète la commande de relais 4, de manière que la commande de déconnexion n'agisse que le temps de la mesure, soit environ 1 minute. Parallèlement, la signalisation 10 se déclenche et reste en fonctionnement le temps de la mesure.

L'alimentation de chaque unité de baie UBe s'effectue localement par une source d'alimentation 119 fournissant, à travers des connexions 11 et 121, l'énergie électrique destinée à alimenter tous les circuits internes qu'elle comprend, à savoir le relais 4, la signalisation 10, le récepteur 115, le décodeur 116 et la commande de relais 117.

La résistance 118 qui permet de capter le signal de l'émetteur de l'unité de baie UBo est une résistance faible, de l'ordre de quelques dixièmes d'ohm.

Ce second mode de réalisation du dispositif selon l'invention, en permettant de réaliser la déconnexion complète de la terre des câbles d'un réseau de télécommunication, autorise le contrôle d'étanchéité de tous les réseaux câblés, pourvu qu'ils comportent une gaine ou des fils métalliques, et en particulier le contrôle des réseaux à longue distance, ce qui constitue un progrès notable par rapport aux techniques existantes.

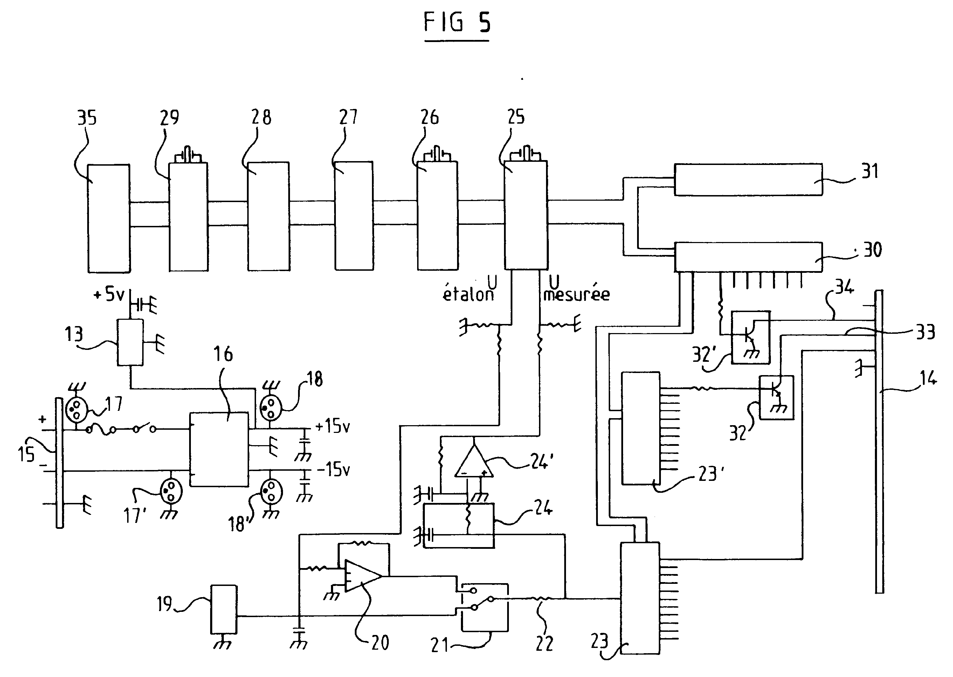

Si on se réfère maintenant à la figure 5, on voit que l'unité centrale de mesure du dispositif selon l'invention comprend un bornier 14 de sortie vers les unités de baies, et un bornier d'alimentation 15 en courant continu. Son circuit d'alimentation comprend un convertisseur 16 DC/DC isolé galvaniquement, qui transforme la tension d'alimentation générale continue de 48 V en deux tensions continues + 15V et - 15V destinées à alimenter sa partie analogique. Les entrées et sorties des convertisseurs sont pourvues d'éclateurs 17 et 17' respectivement 18 et 18' protégeant l'unité centrale et le réseau d'alimentation 48 V des surtensions éventuelles, tandis que la sortie +15V est connectée à un régulateur 13 5v alimentant les circuits de la partie numérique.

Dans la partie analogique de l'unité centrale, un générateur 19 de tension 10V, suivi d'un amplificateur 20, délivre les deux tensions étalons de mesure + 10V et - 10V, un commutateur analogique 21 permettant de choisir l'une ou l'autre . Le commutateur 21 est suivi d'une résistance étalon 22 et d'un multiplexeur analogique 23 permettant la connexion à l'unité de baie sélectionnée.

Une fois la connexion établie, le signal de mesure traverse le filtre 24 puis un suiveur 24' à entrée haute impédance éliminant les courants parasites, et atteint un convertisseur analogique numérique 25 qui rend le signal utilisable par la partie numérique de l'unité centrale.

La partie numérique de l'unité centrale comprend un microprocesseur 26 qui traite les données numériques, une mémoire 27 (RAM) qui stocke les données nécessaires au logiciel, ainsi que les mesures effectuées, une mémoire 28 (EPROM) effaçable par UV, qui contient le logiciel de contrôle du dispositif, ainsi qu'une horloge 29 qui synchronise le dispositif, cette horloge 29 étant par ailleurs reliée à un MODEM 35. Elle comprend en outre deux périphériques 30 et 31 (PIA) gérant les entrées-sorties.

Le périphérique 30 (PIA) gère le multiplexeur analogique 23 ainsi qu'un multiplexeur numérique 23' commandant les relais des unités de baie à travers des connexions 33, et dont les sorties sont bufférisées par des transistors 32 montés en collecteur ouvert, destinés à augmenter leur puissance. Il gère en outre les voyants d'alarme des unités de baies à travers des connexions 34, ses sorties étant également bufférisées par des transistors 32' montés en collecteur ouvert.

Le périphérique 31 (PIA2) gère les voyants d'alarme et de marche/arrêt de l'unité centrale, la sélection de l'unité de baie et les seuils de référence en tension, ainsi que le bouton de remise à zéro.

La partie numérique de l'unité centrale comprend en outre une pile branchée sur un circuit de détection de chutes de tension : si la tension d'alimentation baisse, l'horloge 29 et la mémoire 27 sont alimentées par la pile, ce qui assure la synchronisation du système et la sauvegarde des données stockées dans la mémoire 27.

Un circuit de démultiplexage des données utilisées par le microprocesseur 26, ainsi qu'un circuit programmable composé de portes logiques réalisant la logique nécessaire au système complètent la partie numérique de l'unité centrale.

Le fonctionnement du dispositif selon l'invention est le suivant : chacune des unités de baies est testée cycliquement, selon une séquence définie par un logiciel enregistré dans la mémoire effaçable 28, la synchronisation de la séquence étant assurée par l'horloge 29 et son exécution par le microprocesseur 26.

L'unité de baie (par exemple UB2) étant sélectionnée, le microprocesseur 26 envoie, par l'intermédiaire de son bus, l'ordre de basculer le relais de l'UB1. Cet ordre est répercuté par le périphérique 30 (PIA1) sur le multiplexeur numérique 23', qui aiguille l'ordre vers l'UB, la baie correspondante étant aussitôt déconnectée de la terre.

Le microprocesseur 26 envoie alors au multiplexeur analogique 23, toujours par l'intermédiaire du bus et du périphérique 30 (PIA1) l'ordre de placer le point de mesure sur l'UB1.

Le signal de mesure, après avoir traversé le filtre 24 et le suiveur 24', est numérisé par le convertisseur analogique numérique 25, de même que la tension étalon. Ces deux valeurs numériques permettent le calcul de la résistance d'isolement de l'UB2, dont la valeur est comparée au seuil de référence choisi.

Le contrôle du couple électrochimique se fait de la même manière, après changement du signe de la tension étalon, et les valeurs obtenues sont comparées aux précédentes.

Selon le résultat de la comparaison, une alarme peut être déclenchée : le microprocesseur 26 donne alors l'ordre, par l'intermédiaire du périphérique 31, de faire basculer le relais du voyant d'alarme de l'UC, qui s'allume. Le même ordre envoyé à l'UB2 par l'intermédiaire du périphérique 30 (PIA1) et du multiplexeur numérique 23', provoque l'allumage du voyant d'alarme sur l'UB1.

Les données mesurées sont stockées dans la mémoire 27 (RAM) sur l'ordre du microprocesseur 26, ce qui permet d'observer le vieillissement du câble.

Le dispositif selon l'invention présente l'avantage déjà exposé de permettre un contrôle efficace dans le temps, de l'étanchéité d'un réseau de câbles, notamment d'un réseau à fibres optiques. La détection d'une anomaliesur une unité de baie permet de localiser le câble défectueux, autorisant une remise en état rapide, sans conséquence sur le fonctionnement du réseau.

Bien entendu, la présente invention ne saurait être limitée à la description qui précède de deux de ses modes de réalisation, susceptibles de subir un certain nombre de modifications sans pour autant sortir du cadre de l'invention.

En particulier l'enregistrement des mesures peut être réalisé de manière à fournir des indications utiles sur le vieillissement du réseau en fonction du temps et des variations météorologiques, permettant d'établir un plan de maintenance préventive des réseaux et de réaliser un lissage de la charge des travaux tout en améliorant la fiabilité des réseaux. Il s'ensuit une diminution notable du côut d'exploitation des réseaux.

## Revendications

1. Dispositif pour le contrôle d'étanchéité d'un réseau de câbles à gaine métallique ou à partie métallique, basé sur la mesure de la résistance d'isolement de ladite gaine ou partie métallique par rapport à la terre, caractérisé en ce qu'il comporte en combinaison :
- des moyens pour sélectionner un à un les ensembles de câbles constitutifs du réseau ;
- des moyens pour réaliser la déconnexion de la terre de l'ensemble de câbles sélectionné ;
- des moyens de mesure de la résistance d'isolement par rapport à la terre de cet ensemble de câbles, associés à des moyens de comparaison de cette résistance avec une résistance étalon réglable ;
- des moyens de mesure du couple électrochimique généré par un défaut d'étanchéité ;
- des moyens d'alarme se déclenchant lorsqu'un défaut d'étanchéité est manifesté ;
- des moyens permettant d'enregistrer, de traiter et fournir toutes les informations concernant lesdits ensembles de câbles ;
- des moyens permettant d'interroger le système à distance ou in-situ.

2. Dispositif selon la revendication 1, caractérisé en ce que les moyens de mesure de la résistance des câbles sélectionnés comprennent un moyen pour appliquer successivement, au point de mesure, deux tensions étalons continues égales en valeur absolue mais de signes opposés, permettant de mesurer d'une part la résistance d'isolement des câbles par rapport à la terre, et d'autre part le couple électrochimique généré par un défaut d'étanchéité.

3. Dispositif selon la revendication 1, caractérisé en ce qu'il comprend une unité centrale de mesure (UC) reliée à des unités de baies (UB) contrôlant les ensembles de câbles, ou baies, du réseau.

4. Dispositif selon la revendication 3, caractérisé en ce que chaque unité de baie (UB) comporte un relais permettant de déconnecter la baie sélectionnée de la terre en tête de réseau et de la mettre en contact avec le point de mesure, et un système d'alarme permettant l'allumage d'un voyant lumineux sur sa façade lorsqu'un défaut d'étanchéité est manifesté.

5. Dispositif selon la revendication 3, caractérisé en ce qu'il comporte pour chaque câble ou ensemble de câbles à contrôler une unité de baie de tête (UBo)et au moins une unité de baie d'extrémité UBe, l'unité de baie (UBo)comportant des moyens pour émettre un signal acheminé par la gaine ou la partie métallique du câble vers la ou les unités de baie UBe, qui comportent des moyens pour capter et analyser ce signal, ainsi que des moyens pour commander et réaliser la déconnexion de la terre du câble ou de l'ensemble de câbles concerné.

6. Dispositif selon la revendication 5, caractérisé en ce que l'unité de baie de tête (UBo),alimentée par l'unité centrale de mesure (20), comporte un émetteur de signaux constitué d'un générateur de code binaire (113) associé à un modulateur FSK (114), monté en parallèle avec le relais (4) apte à réaliser la déconnexion de la terre de l'ensemble de câbles (3), les signaux émis par ledit générateur de code (113) et ledit modulateur (114) se propageant le long de la gaine ou partie métallique de l'ensemble de câbles (3) jusqu'à la ou les unités de baie d'extrémité(UBe).

7. Dispositif selon la revendication 3, caractérisé en ce que l'unité de baie d'extrémité(UBe)comporte une résistance faible (118) montée en série avec la terre et reliée à un récepteur FSK (115) associé à un décodeur (116) et à une commande de relais (117) reliée, par une connexion (5), au relais (4) destiné à réaliser la déconnexion de la terre de l'ensemble de câbles (3), l'unité de baie(UBe)étant alimentée localement en énergie électrique par une source d'alimentation (19).

8. Dispositif selon la revendication 7, caractérisé en ce que la résistance (118) est une résistance de quelques dixièmes d'ohm.

9. Dispositif selon la revendication 7, caractérisé en ce que la commande de relais (117) est complétée par un temporisateur qui limite la commande de déconnexion au temps nécessaire à la mesure.

10. Dispositif selon l'une quelconque des revendications 3 à 9, caractérisé en ce que l'unité centrale de mesure (UC) comporte en combinaison :
- un circuit d'alimentation permettant de générer les tensions étalons opposées servant à la mesure ;
- un circuit de génération des tensions seuils de référence ;
- un système de déclenchement de la mesure ;
- un système d'acquisition des informations de mesure et de traitement de ces informations ;
- un système d'alarme.

11. Dispositif selon la revendication 10, caractérisé en ce que le circuit d'alimentation de l'unité centrale (UC) comprend un convertisseur (16) DC/DC transformant la tension d'alimentation générale de 48V en deux tensions continues + 15V et - 15V.

12. Dispositif selon la revendication 10, caractérisé en ce que le système de déclenchement de la mesure de l'unité centrale (UC) comprend un microprocesseur (26) relié à un périphérique (30) lui-même relié d'une part à un multiplexeur numérique (23') qui aiguille vers l'unité de baie sélectionnée l'ordre de basculer le relais (4) correspondant, et d'autre part à un multiplexeur analogique (23) qui place le point de mesure sur la même unité de baie, le microprocesseur (26) assurant l'exécution d'une séquence définie par un logiciel enregistré dans une mémoire effaçable (28) et la synchronisation de la séquence étant assurée par une horloge (29).

13. Dispositif selon la revendication 10, caractérisé en ce que le circuit de génération des tensions seuils de référence comprend un générateur (19) de tension 10V suivi d'un amplificateur (20), un commutateur analogique (21) permettant de sélectionner l'une ou l'autre des deux tensions de référence + 10V et - 10V délivrées, un multiplexeur analogique (23) permettant la connexion avec l'unité de baie sélectionnée.

14. Dispositif selon la revendication 10, caractérisé en ce que le système d'acquisition et de traitement des informations de mesure comprend un convertisseur analogique numérique (25) qui reçoit le signal de mesure et la tension de référence, et envoie les données numériques correspondantes au microprocesseur (26) qui en établit la comparaison et donne si nécessaire l'ordre par l'intermédiaire d'un périphérique (31) de déclencher les alarmes tant dans l'unité de baie sélectionnée que dans l'unité centrale.

15. Dispositif selon la revendication 10, caractérisé en ce que le moyen d'alarme comprend des voyants lumineux s'allumant sur l'unité centrale de mesure ainsi que sur l'unité de baie concernée, avec renvoi automatique de l'alarme vers un centre de surveillance.

16. Dispositif selon la revendication 10, caractérisé en ce qu'il comporte un ordinateur piloté par un logiciel spécifique et muni de moyens permettant de transmettre des informations à distance.

17. Dispositif selon la revendication 16, caractérisé en ce que les moyens permettant de transmettre des informations à distance consistent en un MODEM.

## Patentansprüche

1. Apparat zur Kontrolle der Dichtigkeit eines Netzes aus Kabeln mit metallischem Überzug oder mit einem metallischen Bereich, basierend auf der Messung des Isolationswiderstands dieses metallischen Überzugs oder Bereichs gegenüber Erde, **dadurch gekennzeichnet,** daß er in Kombination umfaßt:
· Mittel zum sukzessiven Auswählen von Kabelgesamtheiten, welche das Netz bilden;
· Mittel zur Trennung der ausgewählten Kabelgesamtheit von der Erde;
· Mittel zur Messung des Isolationswiderstandes dieser Kabelgesamtheit gegen Erde, verbunden mit Mitteln zum Vergleich dieses Widerstands mit einem einstellbaren Eichwiderstand;
· Mittel zur Messung des durch einen Dichtigkeitsmangel erzeugten elektrochemischen Elements;
· Mittel zur Auslösung eines Alarms bei Feststellung eines Dichtigkeitsmangels;
· Mittel zur Erfassung, Verarbeitung und Bereitstellung sämtlicher die genannten Kabelgesamtheiten betreffenden Informationen;
· Mittel zum Abfragen des Systems aus der Ferne oder in- situ.

2. Apparat nach Anspruch 1, **dadurch gekennzeichnet,** daß die Mittel zur Messung des Widerstands der ausgewählten Kabel eine Einrichtung umfassen zum sukzessiven Anlegen zweier Eich-Gleichspannungen gleichen Absolutwertes, aber unterschiedlichen Vorzeichens an den Meßpunkt, wodurch einerseits der Isolationswiderstand der Kabel bezüglich der Erde gemessen werden kann und andererseits das durch einen Dichtigkeitsmangel erzeugte elektrochemische Element.

3. Apparat nach Anspruch 1, **dadurch gekennzeichnet,** daß er eine zentrale Meßeinheit (UC) umfaßt, welche mit den Anschlußeinheiten (UB) verbunden ist, die die Kabelgesamtheiten oder Anschlüsse des Netzes kontrollieren.

4. Apparat nach Anspruch 3, **dadurch gekennzeichnet,** daß jede Anschlußeinheit (UB) ein Relais umfaßt, mit welchem der ausgewählte Anschluß am Kopf des Netzes von der Erde trennbar und in Kontakt mit dem Meßpunkt bringbar ist, sowie ein Alarmsystem, welches bei Feststellung eines Dichtigkeitsmangels das Aufleuchten einer Leuchtanzeige an der Oberfläche der Vorrichtung bewirkt.

5. Apparat nach Anspruch 3, **dadurch gekennzeichnet,** daß er für jedes zu kontrollierende Kabel oder für jede zu kontrollierende Kabelgesamteinheit eine Kopfanschlußeinheit (UBo) und mindestens eine Außenanschlußeinheit (UBe) umfaßt, wobei die Anschlußeinheit (UBo) Mittel zum Abgeben eines Signals umfaßt, welches entlang des metallischen Überzugs bzw. Bereichs des Kabels zu der oder den Anschlußeinheiten UBe verläuft, welche Mittel zur Aufnahme und Analyse des Signals umfassen, sowie Mittel zur Anweisung und Durchführung der Trennung des betroffenen Kabels oder der betroffenen Kabelgesamtheit von der Erde.

6. Apparat nach Anspruch 5, **dadurch gekennzeichnet,** daß die Kopfanschlußeinheit (UBo), welche von der zentralen Meßeinheit (20) versorgt wird, einen Signalgeber umfaßt, welcher aus einem binären Codegenerator (113) und einem zugeordneten FSK-Modulator (114) besteht und parallel zum Relais (4) geschaltet ist, welches die Trennung der Kabelgesamtheit (3) von der Erde ausführen kann, wobei die von dem Codegenerator (113) und Modulator (114) emittierten Signale sich entlang des metallischen Überzugs oder Bereichs der Kabelgesamtheit (3) bis zu der oder den äußeren Anschlußeinheiten (UBe) ausbreiten.

7. Apparat nach Anspruch 3, **dadurch gekennzeichnet,** daß die Außenanschlußeinheit (UBe) einen schwachen Widerstand (118) umfaßt, welcher in Serie zur Erde geschaltet und mit einem FSK-Empfänger (115) verbunden ist, welcher einem Decoder (116) und einer Relaiskommandoeinheit (117) zugeordnet ist, welche über eine Verbindung (5) mit dem Relais (4) verbunden ist, welches zur Trennung der Kabelgesamtheit (3) von der Erde bestimmt ist, wobei die Anschlußeinheit (UBe) von einer lokalen Stromquelle (19) mit elektrischer Energie versorgt wird.

8. Apparat nach Anspruch 7, **dadurch gekennzeichnet,** daß der Widerstand (118) in der Größenordnung zweistelliger Ohmbeträge liegt.

9. Apparat nach Anspruch 7, **dadurch gekennzeichnet,** daß die Relaiskommandostation (117) eine Zeitschaltung aufweist, welche das Kommando zur Trennung von der Erde auf die für die Messung notwendige Zeit begrenzt.

10. Apparat nach einem der Ansprüche 3 bis 9, **dadurch gekennzeichnet,** daß die zentrale Meßeinheit (UC) in Kombination umfaßt:
· einen Versorgungsschaltkreis zur Erzeugung der für die Messung notwendigen entgegengesetzten Eichspannungen;
· einen Schaltkreis zur Erzeugung der als Referenz dienenden Schwellspannungen;
· ein System zur Auslösung der Messung;
· ein System zur Erfassung der Meßdaten und zur Verarbeitung dieser Meßdaten;
· ein Alarmsystem.

11. Vorrichtung nach Anspruch 10, **dadurch gekennzeichnet,** daß der Versorgungsschaltkreis der Zentraleinheit (UC) einen Gleichstromumsetzer (16) umfaßt, welcher die allgemeine Versorgungsspannung von 48V in zwei Gleichspannungen von + 15V und -15V transformiert.

12. Apparat nach Anspruch 10, **dadurch gekennzeichnet,** daß das System zur Auslösung der Messung in der Zentraleinheit (UC) einen Mikroprozessor (26) umfaßt, welcher mit einer Peripherieeinheit (30) verbunden ist, welche wiederum einerseits mit einem Digitalmultiplexer (23') verbunden ist, der der ausgewählten Anschlußeinheit den Befehl zum Kippen des entsprechenden Relais (4) zuführt und andererseits mit einem Analogmultiplexer (23), welcher den Meßpunkt auf dieselbe Anschlußeinheit setzt, wobei der Mikroprozessor (26) die Ausführung einer softwaredefinierten, in einem löschbaren Speicher (28) gespeicherten Sequenz sicherstellt und die Synchronisation dieser Sequenz durch einen Zeitgeber (29) sichergestellt wird.

13. Apparat nach Anspruch 10, **dadurch gekennzeichnet,** daß der Schaltkreis zur Erzeugung der als Referenz dienenden Schwellspannungen einen Generator (19) einer Spannung von 10V umfaßt, welchem ein Verstärker (20) nachgeschaltet ist, wobei ein analoger Wechselschalter (21) die Auswahl der einen oder der anderen zweier zur Verfügung gestellter Bezugsspannungen von +10V und -10V ermöglicht und ein Analogmultiplexer (23) die Verbindung mit der ausgewählten Anschlußeinheit erlaubt.

14. Apparat nach Anspruch 10, **dadurch gekennzeichnet,** daß das System zur Erfassung und Verarbeitung der Meßdaten einen Analog-Digital-Wandler (25) umfaßt, welchem das Meßsignal und die Bezugsspannung zugeführt werden und welcher die entsprechenden numerischen Daten dem Mikroprozessor (26) zuführt, welcher wiederum den Vergleich ausführt und ggf. über die Peripherieeinheit (31) die Alarme sowohl in der ausgewählten Anschlußeinheit als auch in der Zentraleinheit auslöst.

15. Vorrichtung nach Anspruch 10, **dadurch gekennzeichnet,** daß die Alarmvorrichtung Leuchtanzeigen umfaßt, welche sowohl an der zentralen Meßeinheit als auch an der betroffenen Anschlußeinheit aufleuchten mit automatischer Rückmeldung des Alarms zu einem Überwachungszentrum.

16. Apparat nach Anspruch 10, **dadurch gekennzeichnet,** daß er einen von einer speziellen Software gesteuerten Rechner umfaßt, welcher mit Vorrichtungen zur Datenfernübertragung ausgestattet ist.

17. Apparat nach Anspruch 16, **dadurch gekennzeichnet**, daß die Vorrichtungen zur Datenfernübertragung aus einem MODEM bestehen.

## Claims

1. Device for the monitoring of the water tightness of a network of metal sheathed or part metal cables, based on the insulation resistance measurement of the said sheath or metal part with reference to earth, characterised in that it comprises in combination:
- means to select one by one the cable groups constituting the network;
- means to achieve the disconnection of earth from the selected cable group;
- means to measure the insulation resistance of this cable group with reference to earth, associated with means to compare this resistance with an adjustable standard resistance;
- means to measure the electrochemical couple generated by a water tightness fault;
- alarm means triggered when a water tightness fault is indicated;
- means allowing the recording, the processing and the supply of all the information concerning the said cable group;
- means allowing the interrogation of the system at a distance or in-situ.

2. Device according to claim 1, characterised in that the means for the selected cables resistance measurement comprises means for successively applying, at the measurement point, two continuous standard voltages, equal in value but of opposite signs, allowing measurement on the one hand of the insulation resistance of the cables with respect to earth and on the other hand the electrochemical couple generated by a water tightness fault.

3. Device according to claim 1, characterised in that it comprises a central measuring unit (UC) connected to bay units (UB) monitoring the cable groups or bays of the network.

4. Device according to claim 3, characterised in that each bay unit comprises a relay allowing the disconnection of the selected bay from earth at the network head and to place it in contact with the measuring point, and an alarm system allowing the lighting of a light on its front when a water tightness fault is indicated.

5. Device according to claim 3 characterised in that it comprises for each cable or cable group to be monitored a head bay unit (UBo) and at least an end bay unit (UBe), the bay unit (UBo) comprising means for emitting a signal carried by the sheath or metal part of the cable toward the bay unit or units (UBe), which comprises means for capturing and analysing this signal, as well as means for controlling and achieving the disconnection of earth from the cable or the cable group concerned.

6. Device according to claim 5, characterised in that the head bay unit (UBo), supplied by the central measurement unit (20), comprises a signal emitter constituted by a binary code generator (113) associated with a FSK modulator (114), mounted in parallel with the relay (4), capable of achieving the disconnection of earth from the cable group (3), the signals emitted by the said code generator (113) and the said modulator (114) propagating along the length of the sheath or metal part of the cable group (3) up to the end bay unit or units (UBe).

7. Device according to claim 3, characterised in that the end bay unit (UBe) comprises a small resistance (118) mounted in series with earth and connected to a FSK receiver (115) associated with a decoder (116) and to a relay control (117) connected, by a connection (5), to relay (4), intended to achieve the disconnection of earth from the cable group (3), the bay unit (UBe) being locally supplied with electrical energy by a feed source (19).

8. Device according to claim 7, characterised in that the resistance (118) is a resistance of some tenths of an ohm.

9. Device according to claim 7, characterised in that the relay control (117) is completed by a delay which limits the disconnection control to the time necessary for measurement.

10. Device according to any one of claims 3 to 9 characterised in that the central measurement unit (UC) comprises in combination:
- a supply circuit allowing the generation of standard opposite voltages serving for the measurement;
- a reference threshold voltage generator circuit;
- a system of triggering the measurement;
- a measurement information acquisition system and system for treatment of this information;
- an alarm system.

11. Device according to claim 10, characterised in that the supply circuit of the central unit (UC) comprises a converter (16) DC/DC transforming the 48V general supply voltage into two continuous voltages of +15V and -15V.

12. Device according to claim 10, characterised in that the measurement triggering system of the central unit (UC) comprises a microprocessor (26) connected to a peripheral (30), itself connected on the one hand to a digital multiplexor (23') which directs toward the selected bay unit the order to switch the corresponding relay (4), and on the other hand to an analog multiplexor (23) which places the measurement point on the same bay unit, the microprocessor (26) ensuring the execution of a sequence defined by software stored in an erasable memory (28) and the synchronisation of the sequence being assured by a clock (29).

13. Device according to claim 10, characterised in that the reference threshold voltage generator circuit comprises a 10V voltage generator (19) with an amplifier (20), an analog switch (21) allowing the selection of one or other of the two delivered reference voltages of +10V and -10V, an analog multiplexor (23) allowing the connection with the selected bay unit.

14. Device according to claim 10, characterised in that the system for acquisition and treatment of the measurement information comprises an analog digital converter (25) which receives the measurement signal and the reference voltage, and sends the given corresponding data to the microprocessor (26) which compares them and if necessary gives the command by an intermediary peripheral (31) to trigger the alarms, in the selected bay unit and in the central unit.

15. Device according to claim 10 characterised in that the alarm means comprises lamps lit on the central measurement unit and on the bay unit concerned, with automatic cross reference of the alarm to a surveillance centre.

16. Device according to claim 10, characterised in that it comprises a computer controlled by specific software and provided with means allowing the transmission of the information to a distance.

17. Device according to claim 16, characterised in that the means allowing the transmission of the information to a distance consists of a MODEM.
